# EUROPEAN PATENT APPLICATION

(11) **EP 1 744 498 A1**
(43) Date of publication of application: **17.01.2007**
(21) Application number: 05736488.7
(22) Date of filing: 27.04.2005
(51) Int. Cl.: H04L 12/56, G06F 3/12

(54) **INTERNET CONNECTION TERMINAL APPARATUS AND INTERNET CONNECTION STATUS DETERMINING METHOD**

(30) Priority: 06.05.2004 JP 2004137215
(71) Applicant: Matsushita Electric Industries Co., Ltd., Kadoma-shi, Osaka 571-8501 (JP)
(72) Inventor: NAKANISHI, Takashi c/o Matsushita El.Ind.Co.Ltd., Chuo-ku, Osaka-shi, Osaka 540-6319 (JP); HIGASHIMURA, Takahiro c/o Matsushita El.Ind.Co.Ltd, Chuo-ku, Osaka-shi, Osaka 540-6319 (JP); MURATA, Kazuyuki c/o Matsushita El.Ind.Co.Ltd., Chuo-ku, Osaka-shi, Osaka 540-6319 (JP); KUWANO, Hideyuki c/o Matsushita El.Ind.Co.Ltd., Chuo-ku, Osaka-shi, Osaka 540-6319 (JP); YAMAGUCHI, Takehito c/o Matsushita El.Ind.Co.Ltd., Chuo-Ku, Osaka-shi, Osaka 540-6319 (JP)
(74) Representative: Balsters, Robert
(86) International application number: PCT/JP2005/007973
(87) International publication number: WO 2005/109786

(57) **Abstract**

In order to provide an Internet connection terminal apparatus which is capable of correctly determining the Internet connection status without the influences of a DNS cache or the like, an Internet printer (100) includes: a communication unit (102) which provides a communication interface with a network; a TCP/IP protocol stack (103) which provides a protocol processing function in TCP/IP communication; an Internet print application (104) which performs communication processing, print data analysis processing and the like required for a URI print function; a status inquiry processing unit (105) which performs processing for responding to an inquiry about the Internet connection status from another apparatus; an Internet connection checking unit (106) which performs processing for determining whether or not it itself is connected to the Internet; a connection status cache (107) which stores the result of the determination made by the Internet connection checking unit (106); and a DNS client (108) which requests a DNS server to do a name resolution.

## Description

### Technical Field

The present invention relates to an Internet connection terminal apparatus which can be connected to the Internet via a relay device such as a router, and particularly to an Internet connection terminal apparatus which determines the Internet connection status using a DNS server.

### Background Art

Along with the recent spread of broadband in household environments, a growing number of consumer products have been connected to the Internet, and accordingly a variety of services have been provided using such products.

A printer is a typical example of such consumer product. Most of the network-capable printers which are widely used in offices are connected to personal computers (hereinafter referred to as PCs) on Local Area Networks (LANs) so as to print contents according to a printing instruction from each PC.

On the other hand, "URI printing" has been suggested, in which a printer downloads, directly from the Internet, print contents located on the Internet identified by Uniform Resource Identifier (URI). This URI printing does not require a device which issues a print instruction (hereinafter referred to as a host device) to spool print contents, and enables the host device, even if it does not have the Internet connection function, to print the print contents located on the Internet. Therefore, it is relatively easy even for a non-PC which does not have enough system resources to serve as a host device.

In addition, URI printing allows a user to input the URI of print contents on the user interface of his/her own apparatus so as to give a print instruction, and in this case, a host device is not needed.

Incidentally, a printer which is capable of performing URI printing (hereinafter referred to as a URI printer) needs to have a function of checking the Internet connection status of its own. This is because it is of no use for a URI printer to give a print instruction in the Internet unconnected state, and therefore the URI printer can avoid giving a print instruction in vain, if it determines that it is connected to the Internet before giving the print instruction.

A URI printer has been described above as an example of an Internet connection apparatus, but the function of checking the Internet connection status is required not only for a printer but also commonly for any Internet connection apparatuses. Since an Internet connection apparatus is capable of providing its own original function in the Internet connected state, it is obvious that the Internet connection status checking function is absolutely necessary for checking whether or not the original function is in the operational state.

As a method for judging whether or not the Internet connection apparatus is in the state where it can be connected to the Internet, there has been suggested a method for trying to access the server on the Internet and judging the connection status based on whether or not the server has sent back a response.

To be more specific, there are methods including: (1) a method for placing, on the Internet, a WEB server (HTTP server) for checking the Internet connection, trying to access the server, and judging the connection based on the response from the server; and (2) a method for executing a PING command on the server for checking the Internet connection and judging the connection based on the response from the server.

However, in the above-mentioned method (1) using a WEB server, the number of accesses increases as the number of apparatuses which check their Internet connections increases, and as a result, it is assumed that the WEB server may be at risk of going down, under an enormously heavy communication load beyond its limits. In addition, this method has a problem that the WEB server needs to be operated constantly and such constant operation needs to be ensured, and thus the maintenance costs for the server are required.

Furthermore, although the above-mentioned method (2) using a PING command can avoid the communication load problem, it has another problem, as seen from the viewpoint of security maintenance, because there are computer viruses called worms which can invade the server by exploiting a response to PING.

Meanwhile, there is another method (3) for accessing an existing DNS server in the form of a name resolution request using the DNS server, as a server for checking the Internet connection, in place of a server for exclusive use, and judging the connection based on the response from the server.

Note that it is described that it is normal to use an easily obtainable host (domain) name in place of an IP address in order to connect to a WWW server or the like as a process of connecting to the Internet, and that a DNS server is used for converting this host (domain) name into the corresponding IP address (See Patent Reference 1).

In the above-mentioned method (3) using a DNS, a name resolution request using "a host name located on the Internet" is issued to the DNS server, and the Internet connection status is determined based on the resolution result.

The above-mentioned method (3) using a DNS does not require operation and management of the exclusive server. In addition, the DNS has the ability to handle concentration of a lot of accesses because it has a scheme for load distribution. Furthermore, this method is reliable in terms of security because it merely resolves the host name in the DNS server.
Patent Reference 1: Japanese Laid-Open Patent Application No. 2000-183900 Publication

### Disclosure of Invention

### Problems that Invention is to Solve

However, the above-mentioned method (3) for checking the Internet connection using a DNS has a problem that the Internet connection apparatus cannot determine its Internet connection status correctly if a relay device such as a router has a DNS cache function.

More specifically, if the DNS name resolution is done successfully, the router has a function of holding the result of the name resolution in its DNS cache during the effective period. In the case where the DNS name resolution request for the same host name is issued from the Internet connection terminal apparatus, such DNS name resolution request is not issued to the DNS server on the Internet but the result of the name resolution is sent back to the requester from the DNS cache. Many routers have such DNS cache function, and according to this function, high-speed DNS resolution is realized apparently.

A router may send back the name resolution result from its DNS cache to the requester, in the case where the relationship between the host name and the address is held in the DNS cache, even if the cable between the router and the Wide Area Network (WAN) side is not connected. In such case, there occurs a problem that the Internet connection apparatus cannot correctly judge the Internet connection status based on the DNS name resolution response.

Due to limitations of a LAN on which the Internet connection terminal apparatus is located, there may be a case where the Internet connection terminal apparatus has no other choice but to use a DNS server (hereinafter referred to as a local DNS server) on the LAN. In this case, the Internet connection terminal apparatus issues a DNS name resolution request to the local DNS server, and the local DNS server issues a DNS name resolution request to a DNS server on the Internet if the local DNS server cannot do the DNS name resolution by itself.

Here, a DNS server often caches a DNS name resolution request result. Therefore, once the DNS name resolution request result is cached in a local DNS server, the local DNS server does not issue a DNS name resolution request to the DNS server on the Internet during the effective period of the cached request result, even if the Internet connection terminal apparatus issues the DNS name resolution request to the local DNS server.

Even if the Internet connection terminal apparatus is in the state in which it cannot connect to the Internet due to the disconnection of the cable between the relay device such as a router and the Internet, or the like, if a DNS name resolution request is issued to the local DNS server using the name-resolved host name, the local DNS server sends back the cached DNS name resolution result to the Internet connection terminal apparatus without relaying the DNS request to the DNS server on the Internet. Therefore, it cannot be said that it is in the Internet connected state even if the DNS name resolution request result has been sent back, namely, there is a problem that the Internet connection status cannot be correctly determined.

Furthermore, in the case where the host terminal device issues a request to the Internet connection terminal apparatus to inquire whether or not it is in the Internet connected state, the Internet connection terminal apparatus sends a name resolution request to a target DNS server at the time of the inquiry request, but the time for receiving the response depends on the internal processing time of the DNS server or the communication time between DNS servers. Therefore, it may take time to detect the Internet connection status itself, and if the information about the response is sent back to the host device after receiving the response, it takes a long time, on the terminal apparatus, before shifting to the next processing depending on the response, and thus there occurs a problem that the operational response of the terminal apparatus is delayed.

The present invention has been conceived in order to solve the above conventional problems, and an object of the present invention is to provide an Internet connection terminal apparatus which is capable of correctly determining the Internet connection status, in the true sense of the term, without being affected by a DNS cache in a relay device or a DNS server under the network environment, even in the case where the Internet connection terminal apparatus tries a name resolution request to the DNS server and determines the Internet connection status based on the response to the request.

It is another object of the present invention to provide an Internet connection terminal apparatus which is capable of checking the Internet connection using a DNS server while preventing adverse effects such as a delay of a response to a host device, even in the case where the host device issues a request to the Internet terminal apparatus to inquire whether or not the Internet terminal apparatus is connected to the Internet.

### Means to Solve the Problems

In order to solve the above conventional problems, the Internet connection terminal apparatus according to Claim 1 of the present invention is an Internet connection terminal apparatus which can be connected to the Internet via a relay device, and the apparatus includes: a sending unit operable to send, via the relay device, a name resolution request using a non-existing host name or domain name, to a server which performs a name resolution using a host name or a domain name; and an Internet connection status determining unit operable to determine, based on a response to the name resolution request, an Internet connection status that indicates whether or not the Internet connection terminal apparatus is connected to the Internet.

Another aspect of the present invention according to Claim 2 is the invention according to Claim 1, wherein the Internet connection status determining unit of the Internet connection terminal apparatus is operable to determine that the Internet connection terminal apparatus is connected to the Internet in the case where the response to the name resolution request has been sent back within a predetermined period of time, and to determine that the Internet connection terminal apparatus is not connected to the Internet in the case where the response to the name resolution request has not been sent back within the predetermined period of time.

Still another aspect of the present invention according to Claim 3 is the invention according to Claim 2, wherein the response to the name resolution request is a response which corresponds to a failure of the name resolution in the server.

Still another aspect of the present invention according to Claim 4 is the invention according to Claim 1, wherein the server is a Domain Name System (DNS) server.

Still another aspect of the present invention according to Claim 5 is the invention according to Claim 1, wherein the Internet connection terminal apparatus further includes: a storing unit operable to store determination result information that indicates the Internet connection status obtained by the Internet connection status determining unit; and a communicating unit operable to communicate with a host device connected via a communication network, wherein the sending unit is operable to send the name resolution request to the server at a time of an inquiry about an Internet connection status from the host device, the Internet connection status determining unit is operable to determine the Internet connection status based on the response to the name resolution request, and to store the determination result information that is a result of the determination into the storing unit, and the communicating unit is operable to send back the determination result information, as a response to the inquiry, to the host device.

Still another aspect of the present invention according to Claim 6 is the invention according to Claim 5, wherein the communicating unit is operable to send back the determination result information to the host device at the time of the inquiry about the Internet connection status from the host device, the determination result information having been determined and stored into the storing unit by the Internet connection status determining unit before the time of the inquiry.

Still another aspect of the present invention according to Claim 7 is the invention according to Claim 5, wherein the sending unit is operable to send the name resolution request to the server at a predetermined interval, the Internet connection status determining unit is operable to determine an Internet connection status based on every response to the name resolution request, and to store determination result information that is a result of the determination into the storing unit, and the communicating unit is operable to send back the determination result information stored in the storing unit to the host device, at the time of the inquiry about the Internet connection status from the host device.

Still another aspect of the present invention according to Claim 8 is the invention according to Claim 5, wherein the communicating unit is operable to send back the response indicating a connected status to the host device without referring to the storing unit, in the case where the inquiry about the Internet connection status from the host device is a first inquiry.

In the case where it is required to determine whether or not a predetermined terminal apparatus is actually in the Internet connectable state, the Internet connection terminal apparatus of the present invention structured as described above is capable of correctly determining whether or not it is in the connected state to a target DNS server (the Internet), in the true sense of the term, free from influence of the DNS cache located under the network environment, which is the problem of the method for trying to access the DNS server and determine the status based on the response therefrom.

In addition, the Internet connection terminal apparatus of the present invention allows reduction in the influence of the time required for a response to the inquiry to a target DNS server, without having such influence on the processing and the operational responses of other terminal apparatuses.

Note that in order to achieve the above objects, it is also possible to embody the present invention as an Internet connection status determining method that includes, as its steps, the characteristic units included in such Internet connection terminal apparatus, and as a program causing a computer to execute such steps. It should be also noted that such program can be distributed on a recording medium such as a CD-ROM and over a transmission medium such as the Internet.

### Effects of the Invention

According to the Internet connection terminal apparatus of the present invention, it becomes possible to correctly determine its Internet connection status without the influence of a DNS cache. It also becomes possible to give a quick response to an inquiry from a host device about the Internet connection status and thus avoid without fail detrimental effects produced in the host device due to a delay in response. The present invention is described with reference to the following embodiment and the attached diagrams, but they are shown just as some examples, and the present invention is not intended to be limited to them.

### Brief Description of Drawings

FIG. 1 is a block diagram showing an internal functional structure of an Internet printer.
FIG. 2 is a diagram of a network system in which the Internet printer is connected thereto.
FIG. 3 is a flowchart showing a flow of Internet connection checking processing at the time of starting up the Internet printer.
FIG. 4 is a sequence diagram showing a flow of Internet connection status checking processing and a procedure of content printing processing performed between the Internet printer, a digital television, a DNS server and a content server.
FIG. 5 is a flowchart showing a flow of internal processing of the Internet printer at the time of an inquiry about an Internet connection status.
FIG. 6 is a sequence diagram showing a flow of Internet connection status checking processing and a procedure of content printing processing performed between the Internet printer, the digital television, the DNS server and the content server.
FIG. 7 is a diagram of a network system in the case where a DNS server exists on a LAN to which the Internet printer is connected.

### Numerical References

- 100: Internet printer
- 105: Status inquiry processing unit
- 106: Internet connection checking unit
- 107: Connection status cache
- 108: DNS client
- 200: Digital television
- 204: DNS server
- 205: Router
- 206: DNS cache
- 700: Local DNS server
- 701: DNS cache

### Best Mode for Carrying Out the Invention

Hereinafter, an embodiment of the Internet connection terminal apparatus according to the present invention will be described with reference to the drawings.

### (Embodiment)

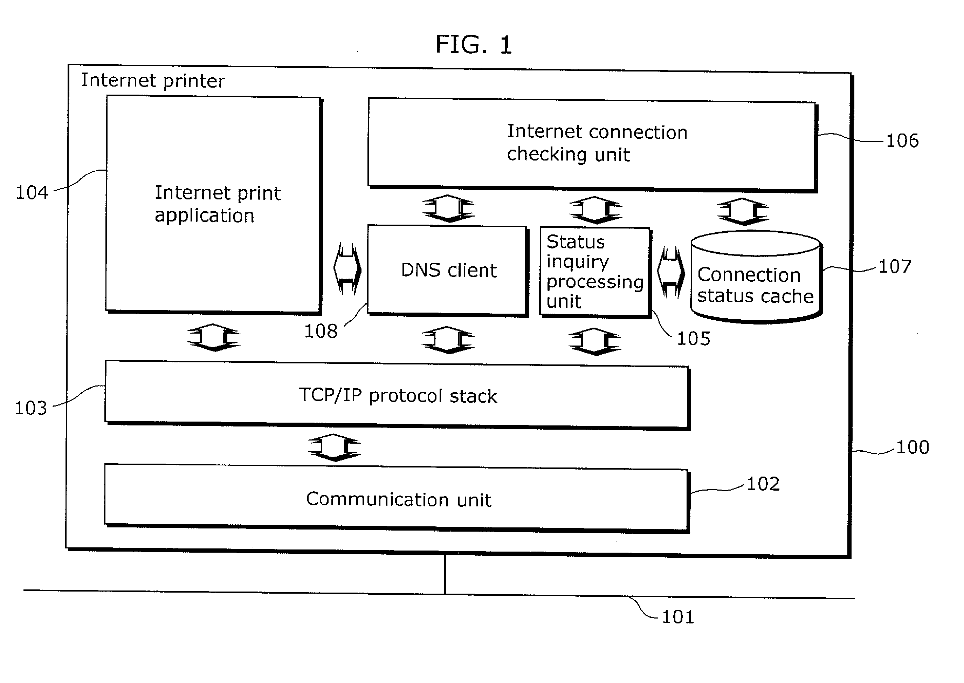

FIG. 1 is a block diagram showing the internal functional structure of an Internet printer 100 according to the present invention. The Internet printer 100 in the present embodiment makes a name resolution request to a DNS server using a non-existing host name or domain name, and determines, depending on the response to the request, the Internet connection status without being affected by a cache function of a relay device such as a router. Note that the Internet connection terminal apparatus which is connected to the Internet to determine its connection status is described as an Internet printer in the present embodiment, but the present invention is not limited to this and can be applied to the Internet-connectable apparatuses such as a television, a video player, a personal computer, an audio apparatus and a printer.

The Internet printer 100 includes: a communication unit 102 which is connected to a network 101 and provides a communication interface with the network 101; a TCP/IP protocol stack 103 which provides a protocol processing function in TCP/IP communication; an Internet print application 104 which performs communication processing, print data analysis processing and the like necessary for an URI print function; a status inquiry processing unit 105 which performs processing for responsding to an Internet connection status inquiry from another apparatus; an Internet connection checking unit 106 which performs processing for determining whether or not it itself is connected to the Internet; a connection status cache 107 which stores the determination result of the Internet connection checking unit 106; and a DNS client 108 which makes a name resolution request to a DNS server.

Here, this is one example in which the Internet printer 100, the Internet connection checking unit 106, the DNS client 108 and the connection status cache 107 correspond to "an Internet connection terminal apparatus", "an Internet connection status determining unit", "a sending unit" and "a storing unit" of the present invention, respectively.

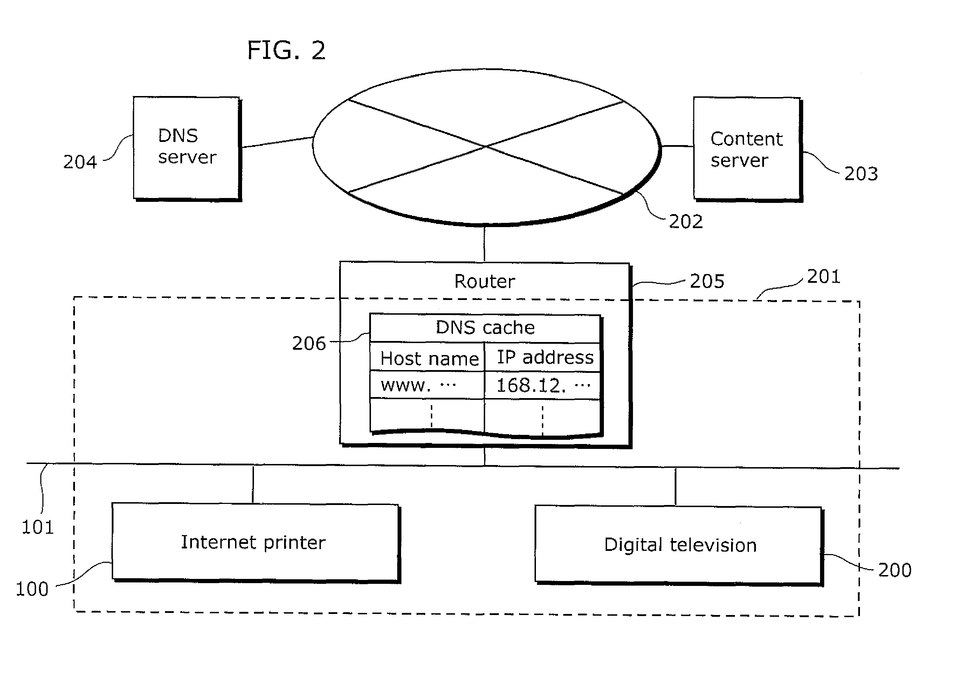

FIG. 2 is a diagram of a network system in which the Internet printer 100 of the present invention is connected thereto. The network system includes: a digital television 200 connected to the Internet printer 100 via the network 101; a LAN 201 which is made up of the Internet printer 100 and the digital television 200; the Internet 202; a content server 203 in which print contents to be printed by the Internet printer 100 are stored; a DNS server 204 which makes a response to a name resolution request from the Internet printer 100; and a router 205 which relays between the Internet 202 and the LAN 201.

The router 205 includes a DNS cache which caches the result of a DNS name resolution in the DNS server 204. The correspondence between a host name and an IP address, for example, is written in the DNS cache 206, and the router 205 has a function of sending back, to the Internet printer 100, the IP address corresponding to the host name about which the Internet printer 100 inquires, without sending a name resolution request to the DNS server 204, in the case where the host name is written in the DNS cache 206.

Here, the digital television 200 is one example corresponding to "a host device" of the present invention. The digital television 200 is equipped with a BML browser for reproducing contents written in Broadcast Markup Language (BML). Some extended printing functions are defined in BML for print-related extention.

Major extended functions include: "getPrinterStatus" function for obtaining the status of the Internet printer 100 connected to the digital television 200; and "printUri" function for issuing a URI print job to the Internet printer 100. These functions are written in BML contents and called by the BML browser when a user processes an event by remote control or the like.

The above-mentioned functions are all synchronous functions and the return from these functions must be made in a short time. This is because the processing in the BML browser is locked until it returns from the synchronous function and the script processing written in the contents are stopped while it is locked, and therefore the contents cannot be displayed as intended by a content provider during the lock period. In other words, it is required to minimize the influence of the synchronous function on contents display by shortening this lock period as much as possible.

As for BML contents, it is necessary to check, using the getPrinterStatus function, whether or not the Internet printer 100 connected to the digital television 200 is in the Internet connected state so that the printUri function can be executed only in the connected state.

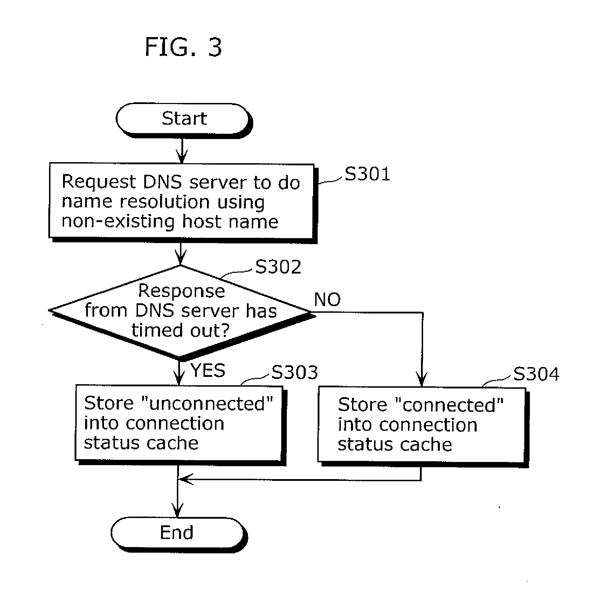

Next, a flow of the Internet connection checking processing executed when the system of the Internet printer 100 is started up will be described with reference to FIG. 3.

FIG. 3 is a flowchart showing the flow of the Internet connection checking processing at the time of the startup of the Internet printer 100.

First, when the system is started up, after confirming that the communication unit 102, the TCP/IP protocol stack 103 and the DNS client 108 are in the available state, the Internet connection checking unit 106 makes a "DNS name resolution request using a host name which does not exist on the Internet" to the DNS client 108 (S301).

Using the communication unit 102 and the TCP/IP protocol stack 103, the DNS client 108 sends, to the DNS server 204 on the Internet 202, a DNS name resolution request packet which corresponds to the "DNS name resolution request using a host name which does not exist on the Internet". After sending the packet, the Internet connection checking unit 106 goes into a state of waiting for reception of a response packet.

Next, in the case where the router 206 is connected to the Internet 202, the DNS name resolution request packet is sent to the DNS server 204 and the name resolution is done. However, since this is a name resolution request using a host name which does not exist on the Internet, the DNS server 204 sends back a DNS response packet of "name resolution failed" to the Internet printer 100 via the router 206. In the case of receiving this DNS response packet in the reception wait state, namely, in the case of receiving a response packet corresponding to "name resolution failed" before the response from the DNS server times out (NO in S302), the Internet connection checking unit 106 determines that it is in the Internet connected state, and stores "connected" into the connection status cache 107 (S304).

Note that the result of "name resolution failed" from the DNS server 204 is never stored into the DNS cache 206 for the following reason. Delay in the exchange of name resolution information between the DNS servers and delay in the host address update of a DNS with a revised entry are considered as the causes of the failure of the name resolution. In such cases, the name resolution becomes possible if the exchange of the name resolution information between the DNS servers has finished. However, assuming that the router 205 stores the result of "name resolution failed" into its DNS cache 206, the result of "name resolution failed" is sent back to the DNS name resolution requester without transferring the name resolution request to the DNS server 204, in the case where such failure result exists in the cache, and therefore the DNS resolution cannot be done in spite of the fact that the server has already been ready for the name resolution. This is not desirable. Therefore, "name resolution failed" is never stored in the DNS cache 206.

In other words, the Internet printer 100 of the present invention makes a "DNS name resolution request using a host name which does not exist on the Internet", from the Internet printer 100, so that it can issue a DNS inquiry request to the DNS server 204 on the Internet, regardless of whether the router 205 includes the DNS cache 206 or not.

On the other hand, in the case where the router 206 is not connected to the Internet 202, for example, where the cable of the router 206 is not connected to the Internet, a DNS name resolution request packet cannot be sent to the DNS server 204 and is lost, so a response packet is not sent back. As a result, the reception wait state of the Internet connection checking unit 106 times out (YES in S302), and thus it determines to be in the Internet unconnected state and stores an "unconnected" into the connection status cache 107 (S303).

Note that in this diagram, the Internet printer 100 checks the Internet connection status when it receives an Internet connection status inquiry request from the digital television 200 after the system is started up.

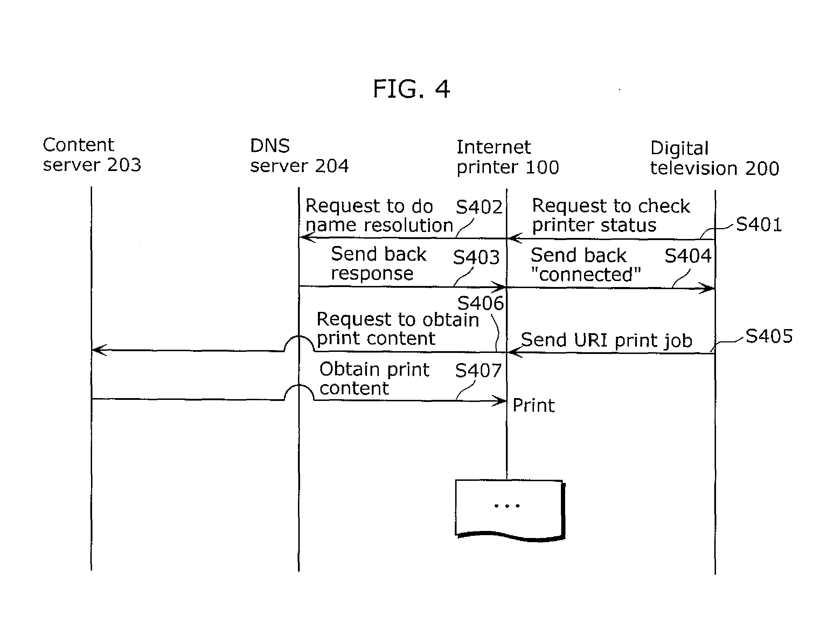

FIG. 4 is a sequence diagram showing a flow of Internet connection status checking processing and a procedure of content printing processing performed between the Internet printer 100, the digital television 200, the DNS server 204 and the content server 203 of the present invention.

First, the digital television 200 requests the Internet printer 100 to check its Internet connection status (S401).

Next, when receiving the request for checking the status, the Internet printer 100 requests the DNS server 204 to do the name resolution using a non-existing host name (S402).

Then, in the case where the Internet connection checking unit 106 of the Internet printer 100 receives a response that corresponds to "name resolution failed" from the DNS server 204, it determines that it is connected to the Internet and sends back "connected" to the digital television side (S404). It also records "connected" into the connection status cache 107.

Next, the digital television 200 which receives the status determination of "connected" sends the specification of a URI print job of a print content to the Internet printer 100 (S405). The Internet printer 100 requests the content server 203 of the specified URI to obtain the print content (S406), obtains the print content (S407), and performs the print processing.

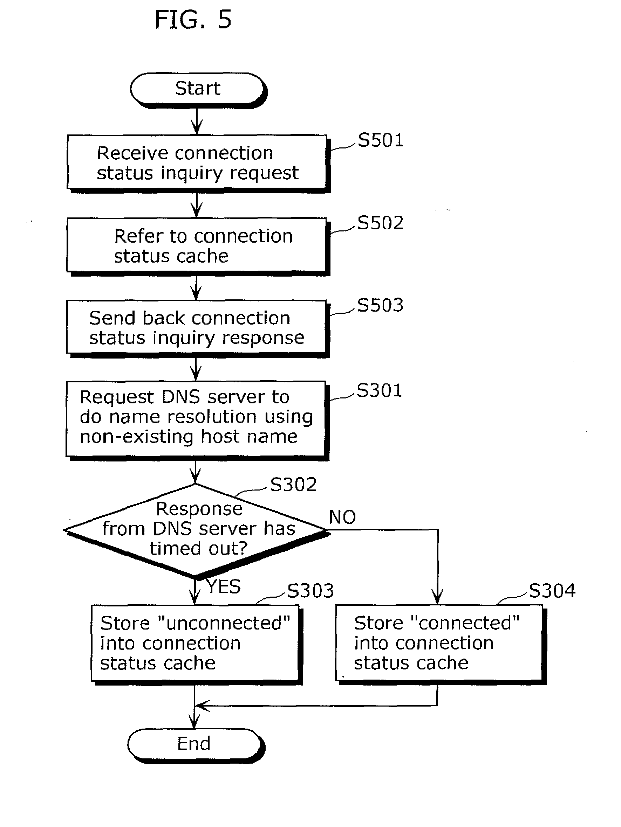

Next, a flow of internal processing of the Internet printer 100 at the time of receiving an Internet connection status inquiry from a host device such as the digital television 200 will be described with reference to FIG. 5.

FIG. 5 is a flowchart showing the flow of the internal processing of the Internet printer at the time of receiving an Internet connection status inquiry from a host device. Note that in FIG. 5, the same reference numbers are assigned to the processes common to those in FIG. 3. Note that in FIG. 5, unlike the case of FIG. 3, in the case where the Internet printer 100 receives the determination of the Internet connected state from the digital television 200, it sends back the connection status information which has already been recorded in the connection status cache 107 before sending a name resolution request to the DNS server 204 so as to determine the response result.

First, when a getPrinterStatus function is called from a BML content, the digital television 200 sends an Internet connection status inquiry request to the Internet printer 100.

Then, when the status inquiry processing unit 105 receives the above-mentioned Internet connection status inquiry request (S501), it refers to the connection status information in the connection status cache 107 (S502), and sends back, to the digital television 200, an Internet connection status inquiry response into which the already recorded connection status information is included (S503). When the Internet printer 100 receives the connection status information inquiry response, the getPrinterStatus function returns and the Internet connection status of the Internet printer 100 is sent back to the BML content.

After sending back the Internet connection status inquiry response (S403), the status inquiry processing unit 105 requests the Internet connection checking unit 106 to check its Internet connection status. In response to this request, the Internet connection checking unit 106 executes the Internet connection status check according to the DNS name resolution request (from S301 to S304). This procedure is same as that in FIG. 3, so the description thereof is not repeated.

Then, in the case where it is found based on the execution result of the getPrinterStatus function that the Internet printer 100 is in the Internet connected state, a printUri function is turned into an executable state on the digital television 200 side so that a URI print job is sent to the Internet printer 100 when the printUri function is called by the user's remote control or the like. And the Internet print application 104 performs the name resolution using the DNS client 108 and the DNS server 204, and then downloads the URI specified print content from the content server 203 so as to execute the printing.

According to the method shown in this diagram, it becomes possible to shorten the lock period during which the processing of the BML browser is locked on the side of the digital television 200, so as to prevent the script processing from stopping during the lock period, and therefore to prevent without fail a drawback such that a content cannot be displayed as intended by a content provider.

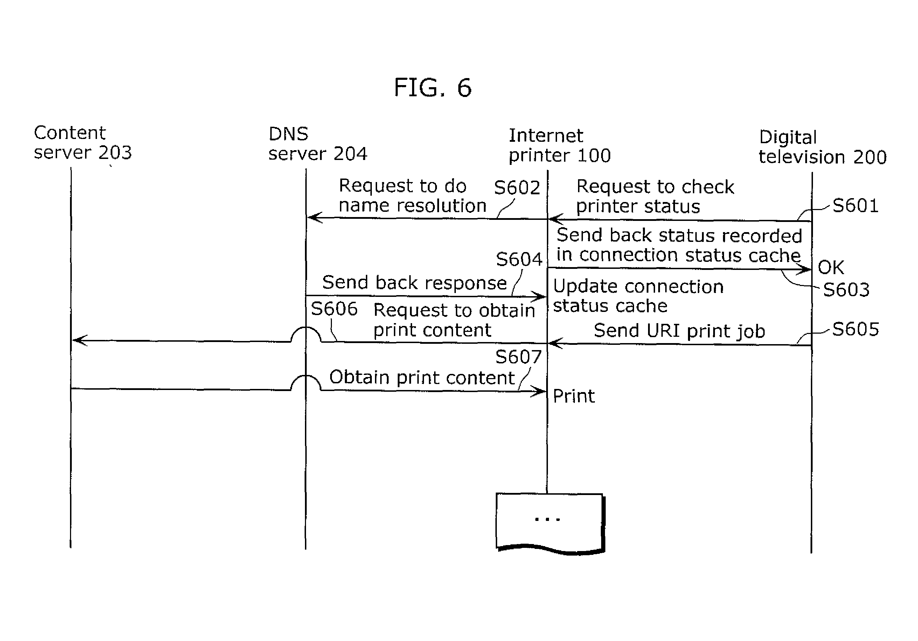

FIG. 6 is a sequence diagram showing a flow of Internet connection status checking processing and a procedure of a content printing processing performed between the Internet printer 100, the digital television 200, the DNS server 204 and the content server 203 of the present invention.

First, the digital television 200 requests the Internet printer 100 to check its Internet connection status (S601).

Next, when receiving the request of status check, the Internet printer 100 requests the DNS server 204 to perform a name resolution using a non-existing host name (S602).

The Internet printer 100 also sends back the connection status which has been determined by the Internet connection checking unit 106 and recorded into the connection status cache 107 immediately before it receives the request for checking the Internet connection status (S603).

Next, in the case where the Internet connection checking unit 106 of the Internet printer 100 receives a response that corresponds to "name resolution failed" from the DNS server 204 (S604), it determines that it is connected to the Internet and updates the connection status cache 107 into "connected".

When receiving the status determination of "connected", the digital television 200 sends the specification of a URI print job of a print content to the Internet printer 100 (S605), the Internet printer 100 requests the content server 203 of the specified URI to obtain the print content (S606), obtains the print content (S607) and performs the print processing.

Note that in S603 in this diagram, the status recorded in the connection status cache 107 is sent back, but it can be conceived that the Internet printer 100 always sends back "connected" to the digital television 200 in the first Internet connection status check, while it sends back the connection status recorded in the connection status cache 107 in the following checks. By doing so, it becomes possible to avoid the occurrence of a lock period during which the processing of the BML browser is locked.

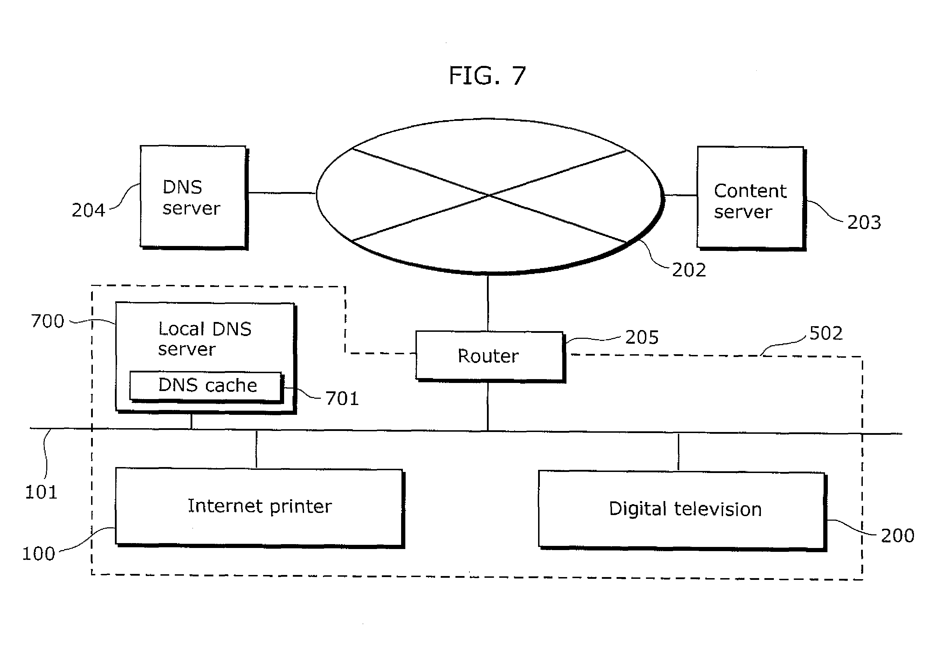

In addition, as shown in FIG. 7, the present invention is effective even in the case where a DNS server (hereinafter referred to as a local DNS server 700) exists on the LAN to which the Internet printer 100 is connected and therefore the Internet printer 100 needs to do a name resolution using the local DNS server 700 due to the limitations of the network.

FIG. 7 is a diagram of a network system in which the DNS server 700 exists on the LAN to which the Internet printer 100 is connected. In FIG. 7, the LAN is made up of: the local DNS server 700 which accepts a DNS request from the Internet printer 100; a DNS cache 701 which stores the DNS result of the DNS server 204; the Internet printer 100; the digital television 200; and the local DNS server 700.

Here, "name resolution failed" is not stored in the DNS cache 701 of the local DNS server 700 for the same reason why it is not stored in the DNS cache 206 of the router 205.

As described above, focusing attention on the characteristic that the result of "name resolution failed" is never stored in the DNS cache of the router 205, the local DNS server 700 or the like, the Internet printer 100 of the present embodiment makes, on purpose, a DNS name resolution request "using a host name which does not exist on the Internet". In other words, since the Internet printer 100 makes the DNS name resolution request to the DNS server 204 on the Internet, regardless of the presence or absence of the DNS cache, and receives the response to the request, it becomes possible to correctly determine that the Internet printer 100 is in the Internet connected state.

It is also possible for the Internet printer 100 of the present embodiment to check the Internet connection status using the DNS server 204 after sending back the response to the inquiry about the Internet connection status from a host device such as the digital television 200. This enables the Internet printer 100 to quickly send back the response to the Internet connection status inquiry to the digital television 200, and the getPrinterStatus function to return quickly to the digital television 200. Therefore, the lock period of the BML browser can be shortened, and the influence on the content display displayed on the television screen or the like can be reduced.

Note that the Internet printer 100 of the present invention may not only send a name resolution request to the DNS server 204 at the time of sending it, as shown in the above FIG. 3 and FIG. 5, but also perform polling processing of a name resolution request to the DNS server 204 on a regular basis. To be more specific, the Internet printer 100 sends a name resolution request to the DNS server 204 on a regular basis, and the Internet connection checking unit 106 determines whether it is in the "connected" state or "unconnected" state upon every reception of a response to the request, and stores the result into the connection status cache 107. Therefore, when the Internet printer 100 is inquired about its Internet connection status by the digital television 200, it can always send back the up-to-date connection information stored in the connection status cache 107.

Furthermore, in the present embodiment, the Internet connection status inquiry is made from the digital television 200 to the Internet printer 100 via a network. However, it may be done by connecting the digital television 200 and the Internet printer 100 one to one using a USB or the like.

### Industrial Applicability

The Internet connection terminal apparatus according to the present invention can be applied to an apparatus, such as a television, a video player, a personal computer, an audio apparatus, a printer or a facsimile, which determines the Internet connection status.

## Claims

1. An Internet connection terminal apparatus which can be connected to the Internet via a relay device, said apparatus comprising:
a sending unit operable to send, via the relay device, a name resolution request using a non-existing host name or domain name, to a server which performs a name resolution using a host name or a domain name; and
an Internet connection status determining unit operable to determine, based on a response to the name resolution request, an Internet connection status that indicates whether or not said Internet connection terminal apparatus is connected to the Internet.

2. The Internet connection terminal apparatus according to Claim 1,
wherein said Internet connection status determining unit is operable to determine that said Internet connection terminal apparatus is connected to the Internet in the case where the response to the name resolution request has been sent back within a predetermined period of time, and to determine that said Internet connection terminal apparatus is not connected to the Internet in the case where the response to the name resolution request has not been sent back within the predetermined period of time.

3. The Internet connection terminal apparatus according to Claim 2,
wherein the response to the name resolution request is a response which corresponds to a failure of the name resolution in the server.

4. The Internet connection terminal apparatus according to Claim 1,
wherein the server is a Domain Name System (DNS) server.

5. The Internet connection terminal apparatus according to Claim 1, further comprising:
a storing unit operable to store determination result information that indicates the Internet connection status obtained by said Internet connection status determining unit; and
a communicating unit operable to communicate with a host device connected via a communication network,
wherein said sending unit is operable to send the name resolution request to the server at a time of an inquiry about an Internet connection status from the host device,
said Internet connection status determining unit is operable to determine the Internet connection status based on the response to the name resolution request, and to store the determination result information that is a result of the determination into said storing unit, and
said communicating unit is operable to send back the determination result information, as a response to the inquiry, to the host device.

6. The Internet connection terminal apparatus according to Claim 5,
wherein said communicating unit is operable to send back the determination result information to the host device at the time of the inquiry about the Internet connection status from the host device, the determination result information having been determined and stored into said storing unit by said Internet connection status determining unit before the time of the inquiry.

7. The Internet connection terminal apparatus according to Claim 5,
wherein said sending unit is operable to send the name resolution request to the server at a predetermined interval,
said Internet connection status determining unit is operable to determine an Internet connection status based on every response to the name resolution request, and to store determination result information that is a result of the determination into said storing unit, and
said communicating unit is operable to send back the determination result information stored in said storing unit to the host device, at the time of the inquiry about the Internet connection status from the host device.

8. The Internet connection terminal apparatus according to Claim 5,
wherein said communicating unit is operable to send back the response indicating a connected status to the host device without referring to said storing unit, in the case where the inquiry about the Internet connection status from the host device is a first inquiry.

9. An Internet connection status determining method for use in an Internet connection terminal apparatus which can be connected to the Internet via a relay device, said method comprising:
a sending step of sending, via the relay device, a name resolution request using a non-existing host name or domain name, to a server which performs a name resolution using a host name or a domain name; and
an Internet connection status determining step of determining, based on a response to the name resolution request, an Internet connection status that indicates whether or not the Internet connection terminal apparatus is connected to the Internet

10. The Internet connection status determining method according to Claim 9,
wherein said Internet connection status determining step includes determining that the Internet connection terminal apparatus is connected to the Internet in the case where the response to the name resolution request has been sent back within a predetermined period of time, and determining that the Internet connection terminal apparatus is not connected to the Internet in the case where the response to the name resolution request has not been sent back within the predetermined period of time.

11. The Internet connection status determining method according to Claim 10,
wherein the response to the name resolution request is a response which corresponds to a failure of the name resolution in the server.

12. The Internet connection status determining method according to Claim 9,
wherein the server is a Domain Name System (DNS) server.

13. The Internet connection status determining method according to Claim 9,
wherein the Internet connection terminal apparatus includes
a storing unit operable to store determination result information that indicates the Internet connection status obtained in said Internet connection status determining step,
said Internet connection status determining method further comprises
a communicating step of communicating with a host device connected via a communication network,
said sending step includes sending the name resolution request to the server at a time of an inquiry about an Internet connection status from the host device,
said Internet connection status determining step includes determining the Internet connection status based on the response to the name resolution request, and storing the determination result information that is a result of said determining into the storing unit, and
said communicating step includes sending back the determination result information, as a response to the inquiry, to the host device.

14. The Internet connection status determining method according to Claim 13,
wherein said communicating step includes sending back the determination result information to the host device at the time of the inquiry about the Internet connection status from the host device, the determination result information having been determined and stored into the storing unit in said Internet connection status determining step before the time of the inquiry.

15. The Internet connection status determining method according to Claim 13,
wherein said sending step includes sending the name resolution request to the server at a predetermined interval,
said Internet connection status determining step includes determining an Internet connection status based on every response to the name resolution request, and storing determination result information that is a result of said determining into the storing unit, and
said communicating step includes sending back the determination result information stored in the storing unit to the host device, at the time of the inquiry about the Internet connection status from the host device.

16. The Internet connection status determining method according to Claim 13,
wherein said communicating step includes sending back the response indicating a connected status to the host device without referring to the storing unit, in the case where the inquiry about the Internet connection status from the host device is a first inquiry.

17. A program for causing a computer to realize the steps of the Internet connection status determining method according to Claim 9.

18. A computer readable recording medium on which the program according to Claim 17 is recorded.

## Amended claims

### Amended claims under Art. 19.1 PCT

1. An Internet connection terminal apparatus which can be connected to the Internet via a relay device, said apparatus comprising:
a sending unit operable to send, via the relay device, a name resolution request using a host name or a domain name which has not been registered in a server which performs a name resolution using a host name or a domain name, to the server which performs the name resolution; and
an Internet connection status determining unit operable to determine, based on a response to the name resolution request, an Internet connection status that indicates whether or not said Internet connection terminal apparatus is connected to the Internet.

2. The Internet connection terminal apparatus according to Claim 1,
wherein said Internet connection status determining unit is operable to determine that said Internet connection terminal apparatus is connected to the Internet in the case where the response to the name resolution request has been sent back within a predetermined period of time, and to determine that said Internet connection terminal apparatus is not connected to the Internet in the case where the response to the name resolution request has not been sent back within the predetermined period of time.

3. The Internet connection terminal apparatus according to Claim 2,
wherein the response to the name resolution request is a response which corresponds to a failure of the name resolution in the server.

4. The Internet connection terminal apparatus according to Claim 1,
wherein the server is a Domain Name System (DNS) server.

5. The Internet connection terminal apparatus according to Claim 1, further comprising:
a storing unit operable to store determination result information that indicates the Internet connection status obtained by said Internet connection status determining unit; and
a communicating unit operable to communicate with a host device connected via a communication network,
wherein said sending unit is operable to send the name resolution request to the server at a time of an inquiry about an Internet connection status from the host device,
said Internet connection status determining unit is operable to determine the Internet connection status based on the response to the name resolution request, and to store the determination result information that is a result of the determination into said storing unit, and
said communicating unit is operable to send back the determination result information, as a response to the inquiry, to the host device.

6. The Internet connection terminal apparatus according to Claim 5,
wherein said communicating unit is operable to send back the determination result information to the host device at the time of the inquiry about the Internet connection status from the host device, the determination result information having been determined and stored into said storing unit by said Internet connection status determining unit before the time of the inquiry.

7. The Internet connection terminal apparatus according to Claim 5,
wherein said sending unit is operable to send the name resolution request to the server at a predetermined interval,
said Internet connection status determining unit is operable to determine an Internet connection status based on every response to the name resolution request, and to store determination result information that is a result of the determination into said storing unit, and
said communicating unit is operable to send back the determination result information stored in said storing unit to the host device, at the time of the inquiry about the Internet connection status from the host device.

8. The Internet connection terminal apparatus according to Claim 5,
wherein said communicating unit is operable to send back the response indicating a connected status to the host device without referring to said storing unit, in the case where the inquiry about the Internet connection status from the host device is a first inquiry.

9. An Internet connection status determining method for use in an Internet connection terminal apparatus which can be connected to the Internet via a relay device, said method comprising:
a sending step of sending, via the relay device, a name resolution request using a host name or a domain name which has not been registered in a server which performs a name resolution using a host name or a domain name, to the server which performs the name resolution; and
an Internet connection status determining step of determining, based on a response to the name resolution request, an Internet connection status that indicates whether or not said Internet connection terminal apparatus is connected to the Internet.

10. The Internet connection status determining method according to Claim 9,
wherein said Internet connection status determining step includes determining that the Internet connection terminal apparatus is connected to the Internet in the case where the response to the name resolution request has been sent back within a predetermined period of time, and determining that the Internet connection terminal apparatus is not connected to the Internet in the case where the response to the name resolution request has not been sent back within the predetermined period of time.

11. The Internet connection status determining method according to Claim 10,
wherein the response to the name resolution request is a response which corresponds to a failure of the name resolution in the server.

12. The Internet connection status determining method according to Claim 9,
wherein the server is a Domain Name System (DNS) server.

13. The Internet connection status determining method according to Claim 9,
wherein the Internet connection terminal apparatus includes
a storing unit operable to store determination result information that indicates the Internet connection status obtained in said Internet connection status determining step,
said Internet connection status determining method further comprises
a communicating step of communicating with a host device connected via a communication network,
said sending step includes sending the name resolution request to the server at a time of an inquiry about an Internet connection status from the host device,
said Internet connection status determining step includes determining the Internet connection status based on the response to the name resolution request, and storing the determination result information that is a result of said determining into the storing unit, and
said communicating step includes sending back the determination result information, as a response to the inquiry, to the host device.

14. The Internet connection status determining method according to Claim 13,
wherein said communicating step includes sending back the determination result information to the host device at the time of the inquiry about the Internet connection status from the host device, the determination result information having been determined and stored into the storing unit in said Internet connection status determining step before the time of the inquiry.

15. The Internet connection status determining method according to Claim 13,
wherein said sending step includes sending the name resolution request to the server at a predetermined interval,
said Internet connection status determining step includes determining an Internet connection status based on every response to the name resolution request, and storing determination result information that is a result of said determining into the storing unit, and
said communicating step includes sending back the determination result information stored in the storing unit to the host device, at the time of the inquiry about the Internet connection status from the host device.

16. The Internet connection status determining method according to Claim 13,
wherein said communicating step includes sending back the response indicating a connected status to the host device without referring to the storing unit, in the case where the inquiry about the Internet connection status from the host device is a first inquiry.

17. A program for causing a computer to realize the steps of the Internet connection status determining method according to Claim 9.

18. A computer readable recording medium on which the program according to Claim 17 is recorded.
